# EUROPEAN PATENT APPLICATION

(11) **EP 1 997 388 A1**
(43) Date of publication of application: **03.12.2008**
(21) Application number: 07109432.0
(22) Date of filing: 01.06.2007
(51) Int. Cl.: A23L 1/164, A23L 1/00, A23G 3/48, A23G 3/00

(54) **A cereal molded snack**

(71) Applicant: Nestec S.A., 1800 Vevey (CH)
(72) Inventor: Dupart, Pierre, 1010, Lausanne (CH); Dai, Jun Xia, 1350, Orbe (CH); Sirohi, Dhan Pal, 1009, Pully (CH); Desjardins, Jean-Jacques, 1137, Yens (CH); Horisberger, Jean, 1024, Ecublens (CH)
(74) Representative: Cogniat, Eric Jean Marie

(57) **Abstract**

The present invention concerns a cereal molded snack comprising cereal-based flakes agglomerated together with a mix of sugar and fat, wherein the flakes are mainly roller-dried flakes.

## Description

The present invention concerns a cereal molded snack, as well as a process for the manufacture of said snack.

It is already known to have a cereal composite material, like the product according to EP 326'253. This product is not a molded product and furthermore it contains a high amount of rolled oats. The objective of this invention is reach a better water absorption and an improved texture, when used in a low fat meat product, like a mixture of said cereal composite material with conventional sausage ingredients. On the market, the Bolitas product launched in Argentina concerns a breakfast cereal for children and exists under a ball shape. The flakes integrated in this product are extruded. The reason of the use of extruded flakes is that the objective is to use said product in a liquid, wherein it preserves its integrity in said liquid.

The objective of the present invention is to develop a new product, which can be either used per se as a snack or can be used in water or milk to give a pap.

The present invention concerns a cereal molded snack comprising cereal-based flakes agglomerated together with a mix of sugar and fat, wherein the flakes are mainly roller-dried flakes.

Under mainly roller-dried flakes, we understand in the present specification that at least 30 % of the flakes are roller-dried. The remaining flakes are flakes obtained by other technologies well known from the man skilled in the art. It is also possible according to the invention to have near 100 % of the flakes roller-dried.

As said before, the product according to the invention can be either consumed as such or can be poured into liquid to give a pap as infant pap. The product is preferably poured in hot milk or water. On the contrary, the above mentioned Bolitas product is developed not to desintegrate within liquid as all breakfast cereal. The snack according to the invention is a light crispy product, meaning that it is not hard when consumed per se. It has also an internal porosity with very small gap in between.

The type of cereal used according to the invention is not critical. Preferably, the cereal used is wheat, corn or rice oat.

The amount of flakes is of at least 20 % in weight. More preferably, the amount of flakes is comprised between 20 and 60 %. All the % given in the present specification are in weight.

The objective of the invention is really to have a molded snack, wherein all the flakes stick together. This is possible by the presence of sugar. Normally the amount of sugar is higher than the amount of fat. The type of sugar is not critical. Preferably, the sugar used is mono- or disaccharide. The sugar is normally used in powder form and is taken in the group consisting of corn syrup, glucose and saccharose.

The product could contain also up to 15 % of oat flakes. The presence of oat gives a better texture to the product and increases the nutritional value.

The amount of fat is less than 17 %. Preferably, this amount is comprised between 5 and 15 %. The type of fat used is not critical. Preferably , the fat is a vegetable fat, like nut or hazelnut, in the form of paste or grain.

It is also possible to include in the snack product according to the invention, a certain amount of inuline. The amount of inuline is comprised between 0 and 10 %

The flakes used according to the invention have a thickness of less than 1 mm. Preferably, these flakes have a thickness comprised between 0.3 and 0.7 mm.

The snack of the invention has a strength of 1500 to 15000 g. Preferably , the strength is comprised between 2000 and 8000 g. The texture measurement is carried out with a texture analyser TA-Hdi, having a plate of a diameter of 75 mm and working at a pre-test speed of 2 mm/s, a test speed of 1 mm/s, a post-test speed of 10 mm/s. The device has a load cell of 50 kg and a trigger force of 100 g.

The snack of the invention has a size comprised between 1 and 5 cm. Preferably, the snack has a spherical or half-spherical form, with a diameter of around 1.5 to 2.8 cm.

The snack of the invention is in the form of a spherical or half-spherical ball, each having weight of around 3 g and a density between 0.3 and 0.8 g/cm3.

The present invention concerns a process for the manufacture of a cereal molded snack as described above, wherein
- cereal flakes are mixed with sugar and fat,
- said mixture is molded,
- the molded pieces are heat treated,
- are cooled and
- are demolded.

The molding is a known technology: it is possible according to the invention to have directly in the same mold several hundreds of pieces.

The pieces remaining in the mold are heat treated at a temperature between 70 and 200 °C during 15 to 3 minutes. Preferably, the heat-treatment is carried out at a temperature comprised between 160 and 180 °C during 6 to 3 min.

The cooling is carried out at a temperature around 20 °C. The balls are then packed.

The following of the specification is made in relation with a specific example.

### Example

45 % of roller dried wheat flakes are mixed with 10 % oat flakes, 36 % of sugar in powder form, 9 % of hazelnut paste in a Hobart mixer.

Teflon moulds with spherical shape are filled with this mix. The moulds are cooked 10 min. at 200 °C. Then moulds are let to cool down within 30 minutes and the product is demolded and then packed.

The cereal snack balls have a maximum force to break of around 2200 g.

## Claims

**1.** A cereal molded snack comprising cereal-based flakes agglomerated together with a mix of sugar and fat, wherein the flakes are mainly roller-dried flakes.

**2.** A cereal molded snack according to claim 1, wherein the cereal is taken from the group consisting of wheat, corn and rice oat.

**3.** A cereal molded snack according to any of claims 1 or 2, wherein the amount of flakes is of at least 20 % in weight.

**4.** A cereal molded snack according to claim 3, wherein the amount of flakes is comprised between 20 and 60 %.

**5.** A cereal molded snack according to any of claims 1 to 4, wherein the amount of sugar is higher than the amount of fat.

**6.** A cereal molded snack according to any of claims 1 to 5, comprising further up to 15 % of oat flakes.

**7.** A cereal molded snack according to any of claims 1 to 6, wherein the amount of fat is of less than 17 %.

**8.** A cereal molded snack according to any of claims 1 to 7, wherein the flakes have a thickness of less than 1 mm.

**10.** A cereal molded snack according to any of claims 1 to 9, wherein said snack has a strength of 1500 to 15000 g.

**11.** A cereal molded snack according to claim 10, wherein sais snack has a strength of 2000 to 8000 g.

**12.** A cereal molded snack according to any of claims 1 to 11, having a size comprised between 1 and 5 cm.

**13.** A cereal molded snack according to claim 11, having a round size with a diameter of around 2.2 to 2.8 cm.

**14.** A cereal molded snack according to claim 13, having a weight of around 3 g and a density between 0.3 and 0.8 g/cm3.

**15.** A process for the manufacture of a cereal molded snack according to any of claims 1 to 14, wherein
- cereal flakes are mixed with sugar and fat,
- said mixture is molded,
- the molded pieces are heat treated,
- are cooled and
- are demolded.

**15.** A process according to claim 14, wherein the heat-treatment is carried out at a temperature between 70 and 200 °C during 15 to 4 minutes.

**16.** A process according to any of claims 14 or 15, wherein the cooling takes place at a temperature around 20°C.
